# EUROPEAN PATENT SPECIFICATION

(11) **EP 1 667 514 B1**
(45) Date of publication and mention of the grant of the patent: **26.11.2008**
(21) Application number: 04770787.2
(22) Date of filing: 13.09.2004
(51) Int. Cl.: A01K 27/00

(54) **ROLL-UP LEASH**
AUFROLLBARE LEINE
LAISSE A ENROULEUR

(30) Priority: 13.09.2003 DE 10343112
(43) Date of publication of application: 14.06.2006
(73) Proprietor: FERPLAST SPA, 36070 Castelgomberto (VI) (IT)
(72) Inventor: ARNOLD, Gerhard, D-65197 Wiesbaden (DE)
(74) Representative: Petraz, Gilberto Luigi
(86) International application number: PCT/IT2004/000492
(87) International publication number: WO 2005/025303

(56) References cited:
- US-A- 3 848 827
- US-B1- 6 526 918

## Description

### TECHNICAL FIELD

The present invention concerns a roll-up leash for pets, mainly for dogs, which comprises a casing containing a winding drum, pivoting around an axis and biased in the direction of winding, which is connected to a locking mechanism, which in turn has at least one outwards moving catch that automatically extends when the leash unwinds and projects in the direction of travel of the extended catch, and a catch stop which, by means of a manually operated button, can be moved back out of the direction of travel of the extended catch.

### BACKGROUND ART

Such roll-up leash is the subject of EP-B1-1204312. The roll-up leash described in this document is designed in such a way that the leash locks in the direction of unwinding without the activation of a button, but can always move freely in the direction of winding.

This means that the dog on the leash can only move away from its owner when the leash is unwinding if the owner wants to give the dog more freedom of movement and thus presses the button to release the leash both in the direction of winding and in the direction of unwinding. To function in this way, the known extending dog leash requires a toothed winding drum and a toothed wheel which engages in this toothing. The axis of this toothed wheel is fixed in a guide which can be moved relative to the casing, so that the toothed wheel can extend under a stop fixed to the casing to lock the winding drum with a catch.

Simpler mechanisms of this type are already common in cord-type starting devices for internal combustion engines, whereby the starter cord leash engages with a starter bell when the starter cord is pulled, but disengages when the engine starts to run. Reference is made to DE-1476514 for an example of the prior art. This document describes a retaining bolt which supports both a winding drum and a control plate. A clip-like spring, lying against the bolt, makes the control plate more difficult to turn than the winding drum. This means that the control plate can turn the swivelling catches pivoting on the winding drum outwards thus causing them to engage in the starter bell.

With cord-type starting devices the winding drum only has to be able to make a few rotations to start the engine. Dog leashes, on the other hand, can be up to 8 metres long. Experience shows that a dog on a leash is also constantly moving, which means that the cord drum must rotate constantly at a relatively high speed as the dog runs.

If a spring were used to brake the control plate, this would cause the bolt and the spring to wear out quickly. Furthermore, given that roll-up leashes are usually made of plastic for cost reasons, the heat generated by the friction of the spring could damage the roll-up leash.

Document US-B1-6526918, which represents the closest prior art and the preamble of claim 1, discloses a retracting leash which supports, in a housing, a cable drum, which is under tension in the winding up direction and is connected coaxially with a gear wheel and for which a pawl stop, having a stop at the housing, is provided for blocking the gear wheel in on direction of rotation. The pawl stop is formed by a pinion, which meshes with the gear wheel and has a shaft, which is mounted displaceably in a guide of the housing, extending at least approximately coaxially to the axis of rotation of the gear wheel. The pinion or a pawl, connected with the pinion, in an end position of the shaft, lies against a stop at the housing, yet is held freely rotatable when the shaft is shifted in the opposite direction. An element for separating the stop from the pinion, acting counter to the force of a spring, is provided.

### DESCRIPTION OF THE INVENTION

The present invention overcomes these problems with a roll-up leash of the above mentioned type which is designed in such a way that it has the simplest possible structure and will work reliably for as long as required.

The invention overcomes existing drawbacks by means of a roll-up leash having the features disclosed in the characterising part of claim 1. The depending claims outline advantageous features of the invention.

This type of extending dog leash has a considerably simpler structure than that according to the aforementioned patent EP-B1-1204312 as it does not require any sort of toothed wheels. It is therefore cheaper to manufacture and does not make any noise whatsoever when winding and unwinding the dog leash because there are no toothed wheels engaging in each other or unwinding and as no catches have to rattle over a catch toothing. Compared to the cord-type starting device according to the previously assessed DE-1476514, the roll-up leash according to this invention has the advantage that no mechanical friction is required to brake the rotating actuator which means there is no wear and tear and there is no undesired heat build-up.

In a further embodiment, the roll-up leash has a particularly simple design where a magnet for generating an axial force directed towards the casing is mounted on the rotating actuator. This also makes assembly easier, as the rotating actuator just has to be inserted into casing and is held in place there by the magnetic force alone.

The catches can also be extended and retracted without contact and thus without friction and wear and tear if, according to another embodiment of the invention, the means of extending and retracting the catch consist of two magnets with opposite poles, positioned one after the other in the direction of rotation of the rotating actuator, and a magnet in the catch, so that, in rest position, the catch is attracted by the first magnet of the rotating actuator and, when the leash winds out, the catch is pushed out by the second magnet of the rotating actuator.

The same magnets can be used for extending and retracting the catches and for braking the rotating actuator if the magnets in the rotating actuator at the same time serve to generate the polar force directed axially towards the casing by means of a metal ring positioned in the casing opposite the magnets.

It is also possible to extend and retract the catches using mechanical means. The means of extending and retracting the catch in this case consists of an outward facing arm on the rotating actuator and a slanted surface on the catch which moves towards the arm.

If the winding drum rotates at high speed when the dog leash is winding up, the catch tends to turn outwards because of the centrifugal force. In that case it would not block the winding drum, but rather slide over the manually operated catch stop and thus cause undesirable noise. This can easily be prevented according to another further embodiment of the invention, whereby the rotating actuator has an arrester hook which latches radially over the catch when the catch is retracted.

The button to release the dog leash can be locked in the release position so that the user does not need to constantly hold it down to allow the dog the freedom determined by the length of the dog leash if the button for the stop, from its position pressed into the casing is transversely mobile to the button's direction of retraction with a click projection under a casing stop.

It is particularly advantageous if the button lies against the end of a single-arm lever, which biases the button away from the casing stop and if the single-arm lever at the same time lies against a lever arm of a two-armed lever, whose other lever arm engages in the mobile catch stop. With this type of design the button tends to move away from the casing stop with its click projection. Therefore, if the user just taps it in its pressed down, locked position, then it will be released from the casing stop and can fully reach its extended position.

### ILLUSTRATION OF DRAWINGS

The invention allows various embodiments. In order to elucidate its basic principle two of these are shown in the drawings and are described below. The drawings show in
- Fig. 1: a cross-section of a major area of a roll-up leash according to the invention in locked position;
- Fig. 2: a cross-section of a top area of the roll-up leash in release position;
- Fig. 3: a section of the top half of the roll-up leash rotated through 90º compared to fig. 1;
- Fig. 4: a section of the area of a button on the roll-up leash to lock and release the dog leash;
- Fig. 5: a diagram pf the winding drum with the adjacent components in locked position;
- Fig. 6: a diagram of the winding drum in release position;
- Fig. 7: a longitudinal section of the roll-up leash in the winding drum area;
- Fig. 8: a diagram of a second embodiment of the winding drum with the adjacent components in locked position;
- Fig. 9: the arrangement according to fig. 8 in the release position.

### DESCRIPTION OF SOME FORMS OF EMBODIMENT OF THE INVENTION

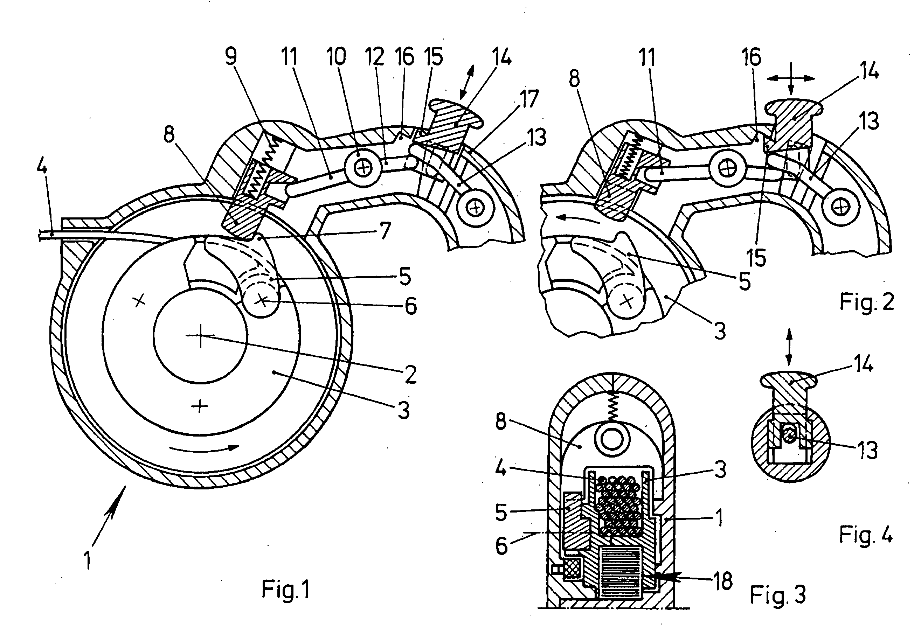

As shown in figure 1, the roll-up leash according to the present invention has a substantially cylindrical casing 1 containing a winding drum 3, pivoting about an axis 2, on which a leash 4 can wind and unwind. The casing 1 has, in the right area of figure 1, an integrally moulded grip 17 which is cut off in the drawing. On one side of the winding drum 3 there are, for example, three catches, of which only one catch 5 is depicted, to keep a swivel axis 6 provided on winding drum 3 turnable. Each catch 5 has a cam 7, which, in the depicted, swivelled out position of the catch 5, lies against a catch stop 8. The catch stop 8 is positioned so that it is radially mobile in the casing 1 and is biased by means of a pressure spring 9 in the direction of the winding drum 3.

A two-armed lever 10 serves to move the catch stop 8 against the force of the spring 9. This has a lever arm 11, which engages in the catch stop 8 and a lever arm 12, which catches under a single-arm lever 13.

To turn the single-arm lever 13, a button 14 is used, which, for this purpose, can be moved into the grip 17 of the casing 1. The button 14 has a click projection 15, which can, when the button 14 is in a pressed down and moved to the left position as seen in figure 1, latch into a casing stop 16, which is shown in figure 2.

As shown in figure 2, the button 14 with its click projection 15 rests in the casing stop 16. This will have caused the lever arm 11 to push the catch stop 8 outwards out of the direction of travel of the catches.5 which means that the winding drum 3 can now rotate freely in both directions of rotation.

Figure 3 shows the winding drum 3 with the leash 4 wound around it. There is also a diagram of a spiral spring 18, which biases the winding drum 3 in the direction of winding.

On the left side of the winding drum 3, the catch 5 which lies against the catch stop 8 is clearly visible.

Figure 4 illustrates the design of the button 14 which can turn the lever 13.

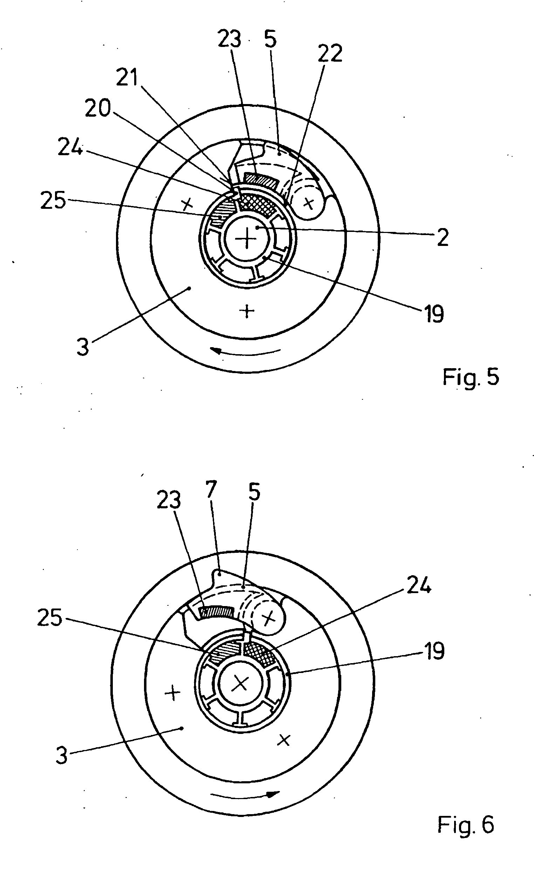

The function of the roll-up leash according to this invention is clearly visible in figures 5 and 6. Figure 5 shows that on the axis 2 a rotating actuator 19 is pivoted, which lies with a nib 20 against a stop 21 of the winding drum 3. The winding drum 3 has another stop 22, which can, when the winding drum 3 rotates relative to the rotating actuator 19 in an anti-clockwise direction, get from the opposite side to the nib 20. In the catch 5 there is a magnet 23, which, in the position shown in figure 5, lies opposite a magnet 24 of the rotating actuator 19. The magnets 23, 24 are magnetised in such a way that opposite poles are facing each other. This means that the magnets 23, 24 mutually attract each other. This holds the catch 5 in the depicted, swivelled-in position.

If the winding drum 3 rotates anti-clockwise relative to the rotating actuator 19, then the magnet 23 will finish in the rotating actuator 19 via a second magnet 25. This second magnet 25 is magnetised in such a way that the same poles are opposite each other with magnets 23, 25 so that a repulsive force is exerted on the catch 5.

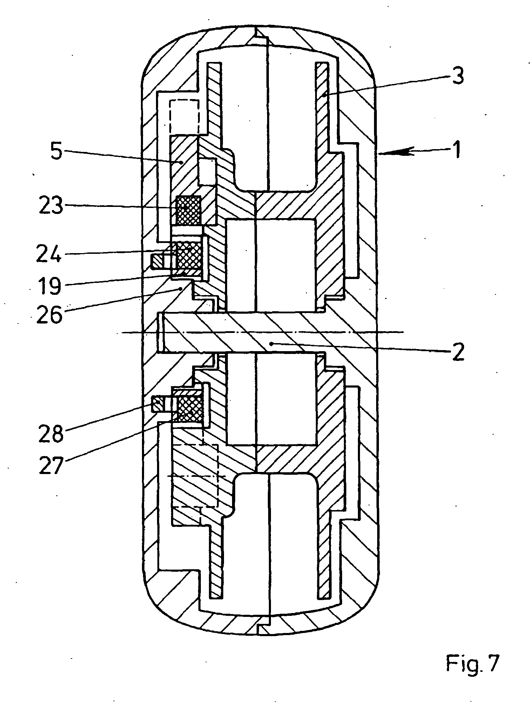

Figure 5 shows the position of the components when the leash 4 winds in. Figure 6 on the other hand shows the position when a dog on the leash wants to move away from its owner and the leash unwinds. The catch 5 then ends up with its cam 7 against the catch stop 8 shown in figures 1, 2 and 3. A relative rotation between the rotating actuator 19 and the winding drum 3 is therefore required for the functioning of the roll-up leash. How this is accomplished can be seen in figure 7.

Figure 7 shows the casing 1 with the axis 2 which is directly moulded onto the casing 1. The winding drum 3 is pivoted on this axis 2 and, for its part, holds the catch 5 swivel-mounted with the magnet 23. The rotating actuator 19, of which the magnet 24 can be seen in figure 7, is also pivoted on a collar 26 of the casing 1. Axially opposite the magnet 24 and other magnets 27 of the rotating actuator 19 there is an iron ring 28 fixed in the casing and positioned coaxially to the rotating actuator 19. Magnets 24, 27 and the iron ring 28 impede a twisting of the rotating actuator 19 on the collar 26.

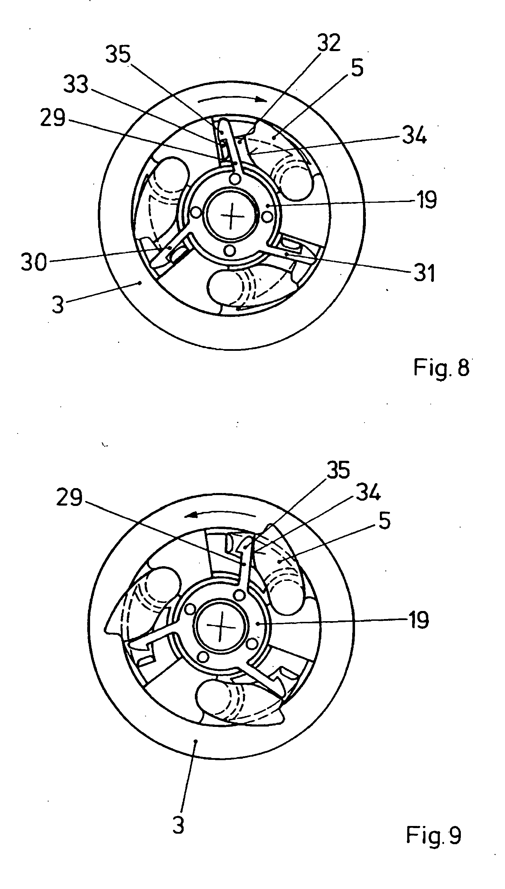

With the embodiment according to figures 8 and 9, the rotating actuator 19 has three diagonally outward facing arms 29, 30, 31. These arms 29, 30, 31 catch, as will now be explained for the arm 29, by means of a recess 32 of the catch. If the winding drum 3 rotates clockwise, the arm 29 lies against a stop 33, represented by the left edge of the recess 32 seen in figure 8. On the right side, the recess 32 is restricted by a slanted surface 34.

If the winding drum 3 rotates anti-clockwise, as is the case when the cord 4 unwinds, then this slanted surface 34 ends up against the arm 29. As the rotating actuator 19 is more difficult to turn than the winding drum 3, the arm 29 pushes the catch 5 outwards, as shown in figure 9, thereby locking the roll-up leash.

Figures 8 and 9 also show that the arms 29, 30, 31 each feature at their free end an arrester hook 35, which, in the position shown in figure 8 - winding in the dog leash 8 - catches over the stop 33 and thus prevents the catches 5, because of the centrifugal force; from getting outside. This type of arrester hook 35 could also be provided with the embodiment according to figures 1 - 7.

It should be noted that the roll-up leash according to this invention can also be used for other purposes such as a cord-type starter.

### Reference list

- 1: casing
- 2: axis
- 3: winding drum
- 4: leash
- 5: catch
- 6: swivel axis
- 7: cam
- 8: catch stop
- 9: pressure spring
- 10: two-armed lever
- 11: lever arm
- 12: lever arm
- 10: single-arm lever
- 14: button
- 15: click projection
- 16: casing stop
- 17: grip
- 18: spiral spring
- 19: rotating actuator
- 20: nib
- 21: stop
- 22: stop
- 23: magnet
- 24: magnet
- 25: magnet
- 26: collar
- 27: magnet
- 28: iron ring
- 29: arm
- 30: arm
- 31: arm
- 32: recess
- 33: stop
- 34: slanted surface
- 35: arrester hook

## Claims

1. Roll-up leash for pets, mainly for dogs, comprising a casing (1) containing a winding drum (3) pivoting on an axis (2), biased in the direction of winding, which is connected to a locking mechanism, which has at least one, when the leash (4) unwinds, automatically extending, through centrifugal force moving catch (5) and a catch stop (8) projecting in the direction of travel of the extended catch (5), where said catch stop (8), by means of a manually operated button (14), can be moved back out of the direction of travel of the extended catch (5), **characterised in that** said catch (5) is positioned swivel-mounted on one side of the winding drum (3) and, to turn the catch (5), a rotating actuator (19) revolving with the winding drum (3), the rotation of said actuator (19) being limited relative to the rotation of the winding drum (3), with the winding drum (3) having, to synchronise the rotating actuator (19) after passing an idle clearance, two stops, and with the rotating actuator featuring means to extend and retract the catch (5) in the case of rotation relative to the winding drum (3), and **in that**, to prevent the rotary motion of the rotating actuator (19), at least one magnet (24,25,27) is positioned between the casing (1) and the rotating actuator (19) and an iron ring (28) is positioned in the casing (1).

2. Roll-up leash according to claim 1, **characterised in that** said magnet, to generate a force directed axially towards the casing, is mounted on the rotating actuator.

3. Roll-up leash according to claims 1 or 2, **characterised in that** the means of extending and retracting the catch (5) are represented by two, consist of two magnets (24, 25) with opposite poles, positioned one after the other in the direction of rotation of the rotating actuator (19), and a magnet (23) in the catch (5), so that, in rest position, the catch (5) is attracted by the first magnet (24) of the rotating actuator (19) and, when the leash unwinds, the catch is pushed out by the second magnet (25) of the rotating actuator (19).

4. Roll-up leash according to at least one of the preceding claims, **characterised in that** the magnets (24, 25, 27) in the rotating actuator (19) at the same time serve to generate a force directed axially towards the casing (1), by means of said iron ring (28) positioned in the casing (1) opposite the magnets (24, 25, 27).

5. Roll-up leash according to at least one of the preceding claims, **characterised in that** the means for extending and retracting the catch (5) are represented by an outwards facing arm (29, 30, 31) of the rotating actuator (19) and a slanted surface (34) on the catch (5) which moves towards the arm.

6. Roll-up leash according to at least one of the preceding claims, **characterised in that** the rotating actuator (19) has an arrester hook (35) which latches radially over the catch (5) when the catch (5) is retracted.

7. Roll-up leash according to at least one of the preceding claims, **characterised in that** the button (14) for moving the catch stop (8) out of its position pressed into the casing (1) is transversely mobile to the direction of retraction of the button (14) with a click projection (15) under a casing stop (16).

8. Roll-up leash according to claim 7, **characterised in that** the button (14) lies against the end of a single-arm lever (13), which biases the button (14) away from the casing stop (16), and that the single-arm lever (13) at the same time lies against a lever arm (12) of a two-armed lever (10), whose other lever arm (11) engages in the mobile catch stop (8).

## Patentansprüche

1. Hunde-Rollleine, welche in einem Gehäuse (1) eine um eine Achse (2) drehbare, in Aufwickelrichtung vorgespannte Seiltrommel (3) lagert, welche mit einem Gesperre verbunden ist, das zumindest eine beim Abrollen der Leine (4) selbsttätig ausfahrende, sich nach außen bewegende Sperrklinke (5) und einen in die Bewegungsbahn der ausgefahrenen Sperrklinke (5) ragenden Klinkenanschlag (8) hat, der mittels einer manuell betätigbaren Taste (14) aus der Bewegungsbahn der ausgefahrenen Sperrklinke (5) zurückbewegbar ist, **dadurch gekennzeichnet, dass** die Sperrklinke (5) schwenkbar an einer Stirnfläche der Seiltrommel (3) angeordnet ist und zum Verschwenken der Sperrklinke (5) ein mit der Seiltrommel (3) umlaufendes, jedoch begrenzt relativ zu ihr verdrehbares Betätigungsteil (19) angeordnet ist, wobei die Seiltrommel (3) zur Mitnahme des Betätigungsteils (19) nach Überwindung eines Leerlaufspiels zwei Anschläge hat und wobei das Betätigungsteil Mittel zum Herausfahren und Einziehen der Sperrklinke (5) bei Drehung relativ zur Seiltrommel (3) aufweist und dass zum Erschweren der Drehbewegung des Betätigungsteils (19) zwischen dem Gehäuse (1) und dem Be-tätigungsteil (19) zumindest ein Magnet (24,25,27) angeordnet ist.

2. Hunde-Rollleine nach Anspruch 1, **dadurch gekennzeichnet, dass** der Magnet zum Erzeugen einer axial zum Gehäuse hin gerichteten Kraft auf das Betätigungsteil ausgebildet ist.

3. Hunde-Rollleine nach den Ansprüchen 1 oder 2, **dadurch gekennzeichnet, dass** die Mittel zum Herausfahren und Einziehen der Sperrklinke (5) durch zwei in Drehrichtung des Betätigungsteils (19) hintereinander angeordnete, entgegengesetzt magnetisierte Magnete (24, 25) und einen Magneten (23) in der Sperrklinke (5) gebildet sind, so dass in Ruhestellung die Sperrklinke (5) von dem ersten Magneten (24) des Betätigungsteils (19) angezogen und beim Ausrollen der Leine die Sperrklinke (5) von dem zweiten Magneten (25) des Betätigungsteils (19) nach außen gedrückt wird.

4. Hunde-Rollleine nach zumindest einem der vorangehenden Ansprüche, **dadurch gekennzeichnet, dass** die Magnete (24, 25, 27) in dem Betätigungsteil (19) zugleich zum Erzeugen der axial zum Gehäuse (1) hin gerichteten Kraft dienen, indem in dem Gehäuse (1) gegenüber der Magnete (24, 25, 27) ein Eisenring (28) angeordnet ist.

5. Hunde-Rollleine nach zumindest einem der vorangehenden Ansprüche, **dadurch gekennzeichnet, dass** die Mittel zum Herausfahren und Einziehen der Sperrklinke (5) durch einen nach außen gerichteten Arm (29, 30, 31) des Betätigungsteils (19) und einer gegen den Arm beweglichen Schrägfläche (34) an der Sperrklinke (5) gebildet sind.

6. Hunde-Rollleine nach zumindest einem der vorangehenden Ansprüche, **dadurch gekennzeichnet, dass** das Betätigungsteil (19) einen bei eingefahrener Sperrklinke (5) radial über die Sperrklinke (5) greifenden Fanghaken (35) hat.

7. Hunde-Rollleine nach zumindest einem der vorangehenden Ansprüche, **dadurch gekennzeichnet, dass** die Taste (14) zum Bewegen des Klinkenanschlags (8) aus ihrer in das Gehäuse (1) hineingedrückten Stellung quer zur Einfahrrichtung der Taste (14) mit einem Rastvorsprung (15) unter einem Gehäuseanschlag (16) verschiebbar angeordnet ist.

8. Hunde-Rollleine nach Anspruch 7, **dadurch gekennzeichnet, dass** die Taste (14) gegen das Ende eines einarmigen Hebels (13) anliegt, welcher die Taste (14) von dem Gehäuseanschlag (16) weg vorspannt, und dass der einarmige Hebel (13) zugleich gegen einen Hebelarm (12) eines zweiarmigen Hebels (10) anliegt, dessen anderer Hebelarm (11) in den verfahrbaren Klinkenanschlag (8) eingreift.

## Revendications

1. Laisse enroulable pour animaux domestiques, principalement pour chiens, comprenant un boîtier (1) contenant un tambour d'enroulement (3) pivotant sur un axe (2), dirigé dans le sens de l'enroulement, et qui est raccordé à un mécanisme de blocage, qui possède au moins un cliquet (5) se déplaçant sous l'action d'une force centrifuge et qui s'étend automatiquement lorsque la laisse (4) se déroule, et une butée de cliquet (8) faisant saillie dans la trajectoire du cliquet étendu (5), où ladite butée de cliquet (8) peut être dégagée de la trajectoire du cliquet étendu (5) au moyen d'un bouton (14) actionné manuellement, **caractérisée en ce que** ledit cliquet (5) est monté en pivot, sur un côté du tambour d'enroulement (3) et, pour faire tourner le cliquet (5), un actionneur rotatif (19) tourne conjointement avec le tambour rotatif (3), la rotation dudit actionneur (19) étant limitée par rapport à la rotation du tambour d'enroulement (3), avec le tambour d'enroulement (3) comportant deux butées permettant de synchroniser l'actionneur rotatif (19) après qu'il ait parcouru une distance libre, et l'actionneur rotatif comportant des moyens de déploiement et de rétractation du cliquet (5) en cas de rotation par rapport au tambour d'enroulement (3), et **en ce que**, pour empêcher le mouvement de rotation de l'actionneur rotatif (19), au moins un aimant (24, 25, 27) est positionné entre le boîtier (1) et l'actionneur rotatif (19) et une bague en fer (28) est positionnée dans le boîtier (1).

2. Laisse enroulable selon la revendication 1, **caractérisée en ce que** ledit aimant est monté sur l'actionneur rotatif afin de générer une force dirigée axialement vers le boîtier.

3. Laisse enroulable selon les revendications 1 ou 2, **caractérisée en ce que** les moyens de déploiement et de rétraction du cliquet (5) sont représentés par deux, constitués par deux aimants (24, 25) avec des pôles opposés, positionnés l'un après l'autre dans la direction de la rotation de l'actionneur rotatif (19), et un aimant (23) dans le cliquet (5), de sorte que, en position de repos, le cliquet (5) est attiré par le premier aimant (24) de l'actionneur rotatif (19) et, lorsque la laisse se déroule, le cliquet est repoussé par le deuxième aimant (25) de l'actionneur rotatif (19).

4. Laisse enroulable selon au moins une des revendications précédentes, **caractérisée en ce que** les aimants (24, 25, 27) dans l'actionneur rotatif (19), servent en même temps à générer une force dirigée axialement vers le boîtier (1), au moyen de ladite bague en fer (28) positionnée dans le boîtier (1) à l'opposé des aimants (24, 25, 27).

5. Laisse enroulable selon au moins une des revendications précédentes, **caractérisée en ce que** les moyens de déploiement et de rétraction du cliquet (5) sont représentés par un bras (29, 30, 31) de l'actionneur rotatif (19) dirigé vers l'extérieur et par une surface inclinée (34) sur le cliquet (5) qui se déplace en direction du bras.

6. Laisse enroulable selon au moins une des revendications précédentes, **caractérisée en ce que** l'actionneur rotatif (19) comporte un crochet d'arrêt (35) qui s'engage radialement avec le cliquet (5) lorsque le cliquet (5) est rétracté.

7. Laisse enroulable selon au moins une des revendications précédentes, **caractérisée en ce que** le bouton (14), destiné à dégager la butée de cliquet (8) de sa position dans laquelle il est pressé dans le boîtier (1), est mobile transversalement au sens de rétraction du bouton (14), une saillie de blocage (15) venant se placer dans un cran d'arrêt (16) du boîtier.

8. Laisse enroulable selon la revendication 7, **caractérisée en ce que** le bouton (14) repose contre l'extrémité d'un levier à un seul bras (13) qui repousse le bouton (14) de la butée de boîtier (16), et **en ce que** le levier à un seul bras (13) repose en même temps contre un bras de levier (12) d'un levier à deux bras (10) dont l'autre bras de levier (11) s'engage dans le doigt d'arrêt de cliquet mobile (8).
